# EUROPÄISCHE PATENTSCHRIFT

(11) **EP 2 505 257 B1**
(45) Veröffentlichungstag und Bekanntmachung des Hinweises auf die Patenterteilung: **17.10.2018**
(21) Anmeldenummer: 12157290.3
(22) Anmeldetag: 28.02.2012
(51) Int. Cl.: B01D 61/18, B01D 65/00, B01D 65/02

(54) **Membranfiltrationsmodul**
Membrane filtration module
Module de filtration sur membranes

(30) Priorität: 31.03.2011 DE 102011006543
(43) Veröffentlichungstag der Anmeldung: 03.10.2012
(73) Patentinhaber: Krones AG, 93073 Neutraubling (DE)
(72) Erfinder: Zacharias, Jörg, 93073 Neutraubling (DE); Scheu, Dirk, 93073 Neutraubling (DE)
(74) Vertreter: Grünecker Patent- und Rechtsanwälte PartG mbB

(56) Entgegenhaltungen:
- EP-A1- 1 219 342
- WO-A2-2009/036717
- JP-A- 2006 281 125
- US-A- 5 397 462
- US-A1- 2004 251 192
- US-A1- 2008 257 824
- US-B1- 6 224 767
- US-B1- 7 540 957

## Beschreibung

Die vorliegende Erfindung betrifft ein Membranfiltrationsmodul, insbesondere für eine Filtrationsanlage.

Membranfiltrationsmodule finden beispielsweise bei der Wasseraufbereitung Anwendung. In der Regel sind diese Ultrafiltrationsanlagen. Dabei werden Kunststoffmembranen eingesetzt, deren Porengröße in einem Bereich von etwa 1 µm bis 0,001 µm liegt. In einigen Bereichen werden auch keramische Membranen eingesetzt.

Eine häufige Bauform von Membranfiltrationsmodulen umfasst ein zentrales Abzugsrohr, das von den Membranen umgeben wird und über das das Filtrat oder Permeat aus dem Membranfiltrationsmodul geleitet werden kann. Die Membranen sind dabei meist in einer Kartuschenhülse angeordnet, mit der sie über ein sogenanntes Potting verbunden sind. Im Fall von Kunststoffmembranen handelt es sich dabei üblicherweise um ein Epoxid-Potting, über das die Kunststoffmembranen mit der Kartuschenhülse fest verbunden beziehungsweise vergossen sind.

Ein Membranfiltrationsmodul ist beispielsweise aus der US 2008/0257824 A1 bekannt.

Besonders im Bereich der Getränkeindustrie sind hohe Hygieneanforderungen zu erfüllen. Der Einsatzbereicht von Membranfiltrationsmodulen reicht von der einfachen Wasserentkeimung bis hin zur Sterilwasser- und Getränkeproduktion (z.B. der kaltaseptischen Getränkeproduktion). Bekannte Membranfiltrationsmodule haben dabei Schwachpunkte hinsichtlich der Reinigungs-, Desinfektions- und Sanitationsfähigkeit. Daher wird der Einsatz von Membranfiltrationsmodulen in der Getränkeindustrie häufig kritisch betrachtet.

Daher ist es Aufgabe der vorliegenden Erfindung, ein hygienischeres Membranfiltrationsmodul bereitzustellen.

Diese Aufgabe wird durch ein Membranfiltrationsmodul nach Anspruch 1 gelöst. Vorteilhafte Weiterbildungen finden sich in den abhängigen Ansprüchen.

Dadurch, dass die Verbindung zwischen der Verbindungseinrichtung und dem Abzugsrohr im zweiten Längsabschnitt angeordnet ist, also in einem Bereich, in dem das Abzugsrohr nicht durch das Membranelement umgeben ist, kann der Anschluss für eine externe Rohrleitung hygienischer ausgebildet werden. Insbesondere kann der Verbindungsbereich einfacher und besser gereinigt werden.

Das Membranelement kann eine oder mehrere Hohlfaser-, Platten- oder Wickelmembrane umfassen. Als Material für die Membrane kann Kunststoff, beispielsweise Polyethersulfon, Keramik oder ein Sintermetall verwendet werden.

Bei der zu filternden Flüssigkeit kann es sich insbesondere um ein Getränk, beispielsweise um Wasser, handeln.

Als Permeat oder Filtrat kann hierin insbesondere das gefilterte Medium, also die gefilterte Flüssigkeit, verstanden werden. Das aus der Flüssigkeit abgefilterte Medium kann als Retentat bezeichnet werden.

Das Membranfiltrationsmodul kann als Dead-End- oder Cross-Flow-Modul ausgebildet sein.

Bei der Rohrleitung, die mit dem Abzugsrohr verbunden werden soll, kann es sich beispielsweise um eine Rohrleitung einer Filtrationsanlage handeln, insbesondere wobei über die Rohrleitung das Permeat oder Filtrat an ein weiteres Element der Filtrationsanlage, beispielsweise einen Reservoirtank, geleitet werden kann.

Das Abzugsrohr kann insbesondere entlang der Längs- oder Symmetrieachse des Membranelements verlaufen. Mit anderen Worten kann das Abzugsrohr ein zentrales Abzugsrohr sein also insbesondere konzentrisch zur Symmetrieachse angeordnet sein.

Das Abzugsrohr kann derart ausgebildet sein, dass das Filtrat aus dem Membranelement in das Abzugsrohr leitbar ist. Beispielsweise kann das Abzugsrohr im Bereich des ersten Längsabschnitts eine oder mehrere Öffnungen, insbesondere innerhalb eines oberen und/oder unteren Pottings bzw. Verschweißung oder Verklebung der Membranen, aufweisen.

Das Abzugsrohr kann im Wesentlichen zylindrisch ausgebildet sein. Das Abzugsrohr kann also eine zylindrische Mantelfläche und zwei gegenüberliegende Enden oder Mündungen umfassen.

Die Länge des Abzugsrohres kann größer sein als die Länge des Membranelements. Im zweiten Längsabschnitt kann das Abzugsrohr insbesondere nicht durch das Membranelement umgeben sein.

Die Verbindungseinrichtung kann insbesondere eine Flanschverbindungseinrichtung sein. Die Verbindung zwischen dem zweiten Längsabschnitt und dem Abzugsrohr kann also insbesondere eine Flanschverbindung sein. Damit ist, beispielsweise im Gegensatz zu einer Steckverbindung, ein hygienischerer Anschluss realisierbar.

Das Membranfiltrationsmodul kann insbesondere eine Wandung umfassen, die das Membranelement umgibt. Die Wandung kann insbesondere zylindrisch ausgebildet sein und an der Außenseite eines zylindrisch ausgebildeten Membranelements angeordnet sein. Das Membranelement kann mit der Wandung über ein Potting oder eine Verpottung verbunden, insbesondere vergossen, sein. Als Potting kann im Fall eines Kunststoffmembranelements insbesondere ein Epoxydharz verwendet werden. Das Membranelement kann auch in mehreren Bereichen, beispielsweise in den Endbereichen, mit einem Potting mit der Wandung verbunden sein.

Das Abzugsrohr kann im zweiten Längsabschnitt insbesondere auch über das Potting hinausragen, also nicht von dem Potting umgeben sein.

Das Membranfiltrationsmodul, insbesondere das Abzugsrohr und das Membranelement können insbesondere aus einem Material sein, das durch Heißwasser sanitisierbar ist. Insbesondere kann das Material derart ausgebildet sein, dass Heißwassertemperaturen von 121 °C bis 140 °C bei Temperaturgradienten von bis zu 4 °C/min bei der Sanistisierung oder Hygienisierung einsetzbar sind. Als Sanistisierung oder Hygienisierung kann insbesondere auch eine Sterilisierung bezeichnet werden.

Das Material kann insbesondere derart ausgebildet sein, dass in einem ersten Schritt eine Heißwassersanitation mit 1 °C/min bis 2 °C/min bis zu 95 °C möglich ist und/oder in einem zweiten Schritt Heißwassertemperaturen bis 121 °C möglich sind, insbesondere bei einem Überdruck von 1,5 bar.

Das Material kann außerdem derart ausgebildet sein, dass Dampf bis zu einem Druck von bis zu 2 bar zur Sanitation einsetzbar ist.

Als Material für die Wandung und/oder das Abzugsrohr des Membranfiltrationsmoduls kann beispielsweise PSU (Polyethersulfon), PPSU (Polyphenylsulfon) und/oder PVC-C (chloriertes Polyvinylchlorid) verwendet werden. Das Membranfiltrationsmodul kann filtratseitig hygienisch, insbesondere entsprechend einer Hygienenorm, ausgebildet sein. Als "filtratseitig" können hierbei jene Elemente des Membranfiltrationsmoduls zusammengefasst werden, die mit dem Permeat oder Filtrat, insbesondere direkt oder unmittelbar, in Kontakt kommen.

Insbesondere kann die Verbindung zwischen der Verbindungseinrichtung und dem Abzugsrohr hygienisch ausgebildet sein. Hygienisch ausgebildet kann in diesem Zusammenhang bedeuten, dass die Verbindung entsprechend einer Hygienenorm ausgebildet ist. Damit kann eine Kontamination des Permeats oder Filtrats im Bereich der Verbindung verhindert oder wenigstens reduziert werden.

Als Hygienenorm können dabei Richtlinien bezeichnet werden, die von der Verbindung zur Sicherung vorherbestimmter Hygienestandards erfüllt werden müssen. Bei der Hygienenorm kann es sich beispielsweise um die DIN-Norm DIN 11864 handeln. In einer Hygienenorm können insbesondere Geometrien oder Konturen für Verbindungselemente, Arten der Verbindung, verwendbare Materialien und/oder Abdichtungsarten spezifiziert sein, und die insbesondere vorteilhafte Ausprägungen empfehlen, welche entsprechend gut zu reinigen sind, so dass sie in der Regel wie folgt ausgebildet sind.

Die Verbindung zwischen der Verbindungseinrichtung und dem Abzugsrohr kann im Wesentlichen spaltfrei ausgebildet sein. Da sich in Spalten häufig Verunreinigungen sammeln können, kann dadurch die Verbindung hygienischer ausgebildet werden. Im Bereich der Verbindung zwischen der Verbindungseinrichtung und dem Abzugsrohr kann auch wenigstens ein Dichtungselement vorgesehen sein. Auch die dadurch bewirkte Abdichtung kann spaltfrei ausgebildet sein. Mit anderen Worten können die Verbindungseinrichtung und das Abzugsrohr flächig miteinander verbunden sein.

Die Verbindungseinrichtung kann derart ausgebildet sein, dass darüber eine Rohrleitung hygienisch, insbesondere entsprechend einer Hygienenorm, mit dem Abzugsrohr verbindbar ist. Bei der Hygienenorm kann es sich um eine oben genannte Hygienenorm handeln.

Das Abzugsrohr ist über eine Verbindungsplatte mit der Verbindungseinrichtung verbunden.

Beispielsweise kann das Abzugsrohr im Bereich eines Endes oder einer Mündung des zweiten Längsabschnitts eine mit der Mantelfläche des Abzugsrohres verbundene Verbindungsplatte aufweisen. Dadurch kann eine sicherere Verbindung zwischen dem Abzugsrohr und der Verbindungseinrichtung bereitgestellt werden. Die Verbindungsplatte kann beispielsweise das Abzugsrohr in Form einer scheibenförmigen Platte umgeben.

Die Verbindungsplatte und das Abzugsrohr können einstückig ausgebildet sein. Mit anderen Worten kann das Abzugsrohr im Bereich des zweiten Längsabschnitts einen oder mehrere Teilbereiche mit vergrößertem Außendurchmesser umfassen, insbesondere wobei die Verbindungseinrichtung im Bereich des einen oder der mehreren Teilbereiche mit dem Abzugsrohr verbunden ist.

Alternativ kann die Verbindungsplatte mit dem Abzugsrohr verklebt oder verschweißt sein.

Die Verbindungsplatte kann insbesondere ein ebenes, flächiges Bauteil sein.

Die Verbindungseinrichtung kann mit der Verbindungsplatte lösbar verbunden, insbesondere verschraubt, sein. Damit ist es möglich, die Verbindungseinrichtung vom Abzugsrohr zu trennen und beispielsweise separat zu warten oder zu reinigen.

Das Abzugsrohr kann einstückig ausgebildet sein oder aus wenigstens zwei Teilen bestehen, die miteinander verklebt und/oder verschweißt sind.

Die wenigstens zwei Teile können insbesondere hygienisch miteinander verklebt sein. Unter hygienisch verklebt kann hierbei insbesondere eine praktisch überschussfreie und spaltfreie Verklebung verstanden werden.

Insbesondere kann der erste Längsabschnitt einen ersten Rohrteil und der zweite Längsabschnitt einen zweiten Rohrteil umfassen, wobei das erste Rohrteil und das zweite Rohrteil miteinander verklebt und/oder verschweißt sind.

Das Membranfiltrationsmodul kann außerdem ein Gehäuse umfassen, insbesondere wobei die Verbindungseinrichtung mit dem Gehäuse verbunden ist. Durch das Gehäuse kann insbesondere das Membranelement vor Beschädigungen geschützt werden. Bei dem Gehäuse kann es sich beispielsweise um ein Edelstahlgehäuse handeln.

Über die Verbindungseinrichtung können insbesondere auch das Abzugsrohr und das Membranelement mit dem Gehäuse verbunden sein.

Ein Ende des Abzugsrohres, insbesondere das Ende, das dem zweiten Längsabschnitt gegenüber liegt, kann mit einem Verschlusselement verschlossen sein, insbesondere wobei das Verschlusselement mit dem Gehäuse verbunden ist.

Das Verschlusselement kann insbesondere direkt oder indirekt mit dem Gehäuse verbunden sein. Beispielsweise kann das Verschlusselement formschlüssig oder kraftschlüssig mit dem Gehäuse verbunden sein. Insbesondere kann das Verschlusselement eine Ausnehmung aufweisen, in die ein Verbindungselement des Gehäuses in Eingriff gebracht ist.

Das Abzugsrohr kann insbesondere zwei Enden aufweisen, wobei an einem ersten Ende die Verbindungseinrichtung angeordnet ist und am zweiten Ende das Verschlusselement. Die beiden Enden können insbesondere die Mündungen des Abzugsrohres sein und die Deckfläche beziehungsweise Grundfläche des zylinderförmigen Abzugsrohres umfassen.

Das Verschlusselement kann federnd am Gehäuse gelagert sein. Dadurch können Wärmeausdehnungsunterschiede zwischen dem Gehäuse und dem Abzugsrohr kompensiert werden.

Das Membranfiltrationsmodul kann also ein Federelement umfassen, wobei das Verschlusselement durch das Federelement federnd am Gehäuse gelagert ist. Das Federelement kann insbesondere mit dem Verschlusselement verbunden sein. Das Federelement kann das Verschlusselement im Betrieb des Membranfiltrationsmoduls auch unter Vorspannung setzen, insbesondere also mit einer Federkraft beaufschlagen. Dadurch kann ein sicherer Verschluss des Abzugsrohres erreicht werden.

Das Abzugsrohr und/oder die Verbindungseinrichtung können eine doppelte Nut im Verbindungsbereich des Abzugsrohres mit der Verbindungseinrichtung umfassen. Dadurch kann eine hygienische Verbindung zwischen dem Abzugsrohr und der Verbindungseinrichtung erreicht werden. Die doppelte Nut kann beispielsweise an einer Verbindungsplatte des Abzugsrohres angeordnet sein.

Im Verbindungsbereich des Abzugsrohres mit der Verbindungseinrichtung ist ein Leckageraum, insbesondere mit wenigstens einer Leckagebohrung, vorgesehen. Dadurch kann eine hygienische Verbindung des Abzugsrohres mit der Verbindungseinrichtung erreicht werden Insbesondere können Schäden einer abdichtenden Seite erkannt werden, bevor z.B. Unfitrat auf die Filtratseite gelangen kann.

Die Verbindungseinrichtung kann eine Deckplatte oder Abdeckplatte eines Gehäuses des Membranfiltrationsmoduls umfassen. Das Gehäuse kann, insbesondere im Betrieb des Membranfiltrationsmoduls, wenigstens teilweise durch die Deckplatte verschlossen werden. Die doppelte Nut, der Leckageraum und/der die wenigstens eine Leckagebohrung können insbesondere auf der Deckplatte angeordnet sein.

Offenbart wird außerdem eine Filtrationsanlage umfassend ein oben beschriebenes Filtrationsmodul und eine Rohrleitung, wobei die Rohrleitung über die Verbindungseinrichtung mit dem Abzugsrohr verbunden ist.

In einer derartigen Filtrationsanlage kann das Permeat oder Filtrat auf hygienische Weise aus dem Membranfiltrationsmodul ausgeleitet werden.

Das Membranfiltrationsmodul kann insbesondere eines oder mehrere der oben beschriebenen Merkmale umfassen.

Die Filtrationsanlage kann insbesondere zur Herstellung von Sterilwasser dienen.

Offenbart wird außerdem eine Getränkeverarbeitungsanlage umfassend ein oben beschriebenes Membranfiltrationsmodul, insbesondere eine oben beschriebene Filtrationsanlage.

Das Membranfiltrationsmodul und/oder die Filtrationsanlage kann insbesondere eines oder mehrere der oben beschriebenen Merkmale umfassen.

Die Getränkeverarbeitungsanlage kann beispielsweise eine Getränkeabfüllanlage sein.

Weitere Merkmale und Vorteile der Erfindung werden nachfolgend anhand der beispielhaften Figuren erläutert. Dabei zeigt
- Figur 1: Teile eines beispielhaften Membranfiltrationsmoduls;
- Figur 2: ein beispielhaftes Membranfiltrationsmodul;
- Figur 3: einen Teil eines beispielhaften Membranfiltrationsmoduls;
- Figur 4: einen weiteren Teil eines beispielhaften Membranfiltrationsmoduls;
- Figur 5: weitere Teile eines beispielhaften Membranfiltrationsmoduls; und
- Figur 6: eine beispielhafte Abdeckplatte eines Gehäuses eines beispielhaften Membranfiltrationsmoduls.

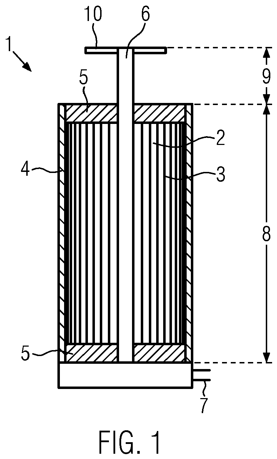

In Figur 1 sind Teile eines beispielhaften Membranfiltrationsmoduls 1 illustriert. Insbesondere zeigt die Figur 1 ein beispielhaftes Membranelement 2, das mehrere Hohlfasermembranen 3 umfasst. Das Membranelement 2 ist mit einer Wandung 4 durch ein sogenanntes Potting 5 an beiden Enden verbunden.

Entlang der Längsachse des beispielhaften Membranfiltrationsmoduls 1 ist ein zentrales Abzugsrohr 6 angeordnet. Über dieses Abzugsrohr 6 kann die gefilterte Flüssigkeit (das Permeat) aus dem Membranfiltrationsmodul 1 geleitet werden. Die zu filternde Flüssigkeit (Unfiltrat) wird über einen Zulauf 7 in das Membranfiltrationsmodul 1 geleitet und dann unter Druck in die Hohlfasermembrane 3 eingebracht. Das Permeat wird dabei durch die Poren der Hohlfasermembrane 3 gedrückt und gelangt in das zentrale Abzugsrohr 6, von wo aus es weitergeleitet werden kann. Bestandteile der zu filtrierenden Flüssigkeit, die einen größeren Durchmesser als die mittlere Porengröße der Hohlfasermembranen 3 aufweisen, werden durch die Hohlfasermembrane 3 zurückgehalten und somit aus der Flüssigkeit gefiltert. Insbesondere können dadurch Mikroorganismen oder Keime (Bakterien, Hefen) aus dem Unfiltrat entfernt werden.

Der Zulauf 7 kann wie gezeigt unterhalb des Membranelements 2 und/oder oberhalb des Membranelements 2 angeordnet sein. Es können dann auch beide Zuläufe gleichzeitig genutzt werden.

Obwohl in diesem Beispiel Hohlfasermembrane 3 gezeigt sind, können prinzipiell auch Flachmembrane oder Wickelmembrane eingesetzt werden. Die Porengröße, insbesondere die mittlere Porengröße, kann zwischen 1 µm und 0,001 µm, insbesondere zwischen 0,2 µm und 0,02 µm liegen. Das beispielhafte Membranfiltrationsmodul 1 kann also zur Ultrafiltration eingesetzt werden.

Das Membranelement 2 kann insbesondere mehrere Hundert bis mehrere Tausend Hohlfasern umfassen. Beispielsweise können 30 - 5000 Hohlfasern vorgesehen sein. Die Hohlfasern könne durch das Potting 5 miteinander verbunden und räumlich fixiert werden.

Das Material für die Hohlfasermembrane 3 kann Kunststoff oder Keramik umfassen oder sein. Das Material des beispielhaften Membranfiltrationsmoduls 1 kann insbesondere derart gewählt werden, dass das Modul durch Heißwasser sanitisierbar ist. Durch das Heißwasser kann beispielsweise ein Sumpf innerhalb des Moduls zuverlässig sanitisiert werden.

Das Abzugsrohr 6 in Figur 1 umfasst einen ersten Längsabschnitt 8, entlang dessen die Mantelfläche des Abzugsrohres 6 von dem Membranelement 2 umgeben wird. In diesem Bereich kann auch das Filtrat in das Abzugsrohr 6 gelangen.

Das Abzugsrohr 6 umfasst außerdem einen zweiten Längsabschnitt 9, der über das Membranelement 2 hinausragt. Mit anderen Worten ist die Länge des Abzugsrohres 6 entlang der Längsachse des Membranfiltrationsmoduls 1 um den zweiten Abschnitt 9 länger als die entsprechende Länge des Membranelements 2 samt Verpottung 5.

Am Ende oder an der Mündung des Abzugsrohres 6 im zweiten Längsabschnitt 9 ist außerdem eine Verbindungsplatte 10 angeordnet. Die Verbindungsplatte 10 entspricht einem Teilbereich des zweiten Längsabschnitts 9, in dem der Außendurchmesser des Abzugsrohres 6 vergrößert ist. Die Verbindungsplatte 10 kann einstückig mit dem Abzugsrohr 6 ausgebildet sein. Alternativ kann die Verbindungsplatte 10 auch separat gefertigt und mit dem Abzugsrohr 6, insbesondere unmittelbar, verbunden sein. Beispielsweise kann die Verbindungsplatte 10 angeklebt und/oder angeschweißt sein.

Eine in Figur 1 nicht gezeigte Verbindungseinrichtung zum Verbinden einer externen Rohrleitung mit dem Abzugsrohr 6 kann mit dem Abzugsrohr 6, insbesondere mit der Verbindungsplatte 10, verbunden sein.

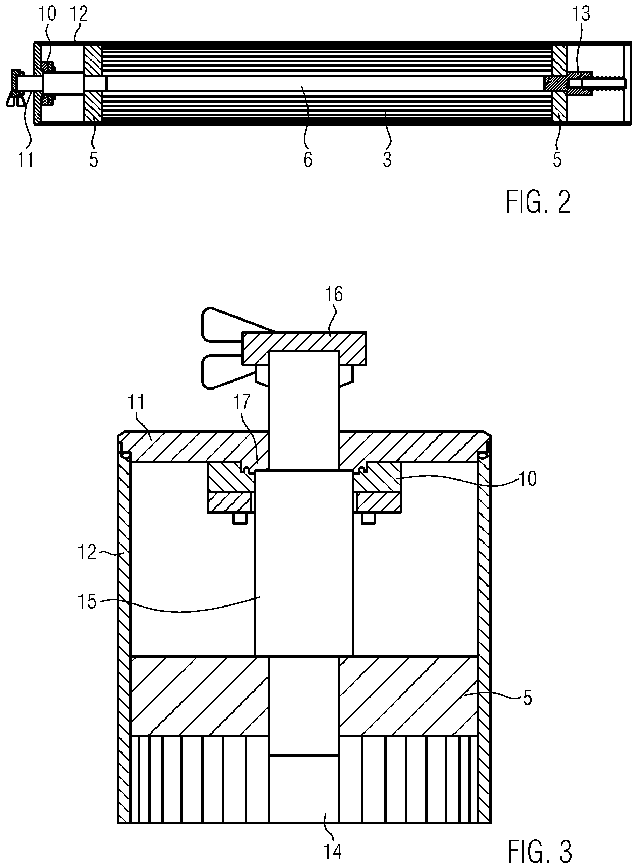

Figur 2 zeigt ein beispielhaftes Membranfiltrationsmodul. Wie in Figur 1 dargestellt umfasst dieses ein Membranelement 2, das mit einer Verpottung 5 mit einer Wandung verbunden ist. Außerdem umfasst das beispielhafte Membranfiltrationsmodul ein Abzugsrohr 6 für das Permeat. In Figur 2 zusätzlich dargestellt ist ein Gehäuse 12, beispielsweise aus Edelstahl, in dem das Membranelement 2 und das Abzugsrohr 6 angeordnet sind. Eine Verbindungseinrichtung 11 zum Verbinden einer nicht dargestellten externen Rohrleitung mit dem Abzugsrohr 6 ist im zweiten Längsabschnitt mit dem Abzugsrohr 6 verbunden. Über die externe Rohrleitung kann das Filtrat beispielsweise an ein weiteres Element einer Filtrationsanlage oder Getränkeabfüllanlage, beispielsweise ein Reservoir, geleitet werden.

Die Verbindungseinrichtung 11 umfasst außerdem eine Deckplatte für das Gehäuse 12.

Die Verbindungseinrichtung 11 ist zerstörungsfrei lösbar mit dem Abzugsrohr 6, insbesondere mit der Verbindungsplatte 10 des Abzugsrohres 6, verbunden. Beispielsweise kann die Verbindungseinrichtung 11 mit der Verbindungsplatte 10 verschraubt sein.

Die Verbindung zwischen der Verbindungseinrichtung 11 und dem Abzugsrohr 6 kann hygienisch, insbesondere entsprechend einer Hygienenorm, ausgebildet sein. Die Hygienenorm kann beispielsweise Konturen der Anschlüsse regeln. Dadurch ist eine hygienische Verbindung mit dem Abzugsrohr 6 möglich und die Gefahr, dass das Filtrat nach der Filtration erneut mit Keimen oder Verschmutzungen belastet wird, kann dadurch reduziert werden. Die Hygienenorm kann beispielsweise der DIN-Norm DIN 11864 entsprechen. Alternativ oder zusätzlich kann die Verbindung auch den Regeln des hygienischen Designs entsprechen, die durch die European Hygienic Engineering and Design Group (EHEDG) festgelegt werden. Damit kann das Membranfiltrationsmodul 1 einem hygienischen Modul aseptischer Anforderungen entsprechen.

Das dem zweiten Längsabschnitt gegenüberliegende Ende des Abzugsrohres 6, also das Ende, an dem nicht die Verbindungseinrichtung 11 angeordnet ist, ist mit einem Verschlusselement 13 verschlossen. Das Verschlusselement 13 ist mit dem Gehäuse 12 verbunden.

Figur 3 zeigt einen Ausschnitt eines beispielhaften Membranfiltrationsmoduls, in dem insbesondere die Verbindungseinrichtung 11 dargestellt ist. In dem Beispiel in Figur 3 umfasst das Abzugsrohr 6 zwei Teile, die miteinander verklebt und/oder verschweißt sind. Ein erster Teil 14 umfasst dabei insbesondere den ersten Längsabschnitt und ein zweiter Teil 15 umfasst den zweiten Längsabschnitt des Abzugsrohres 6. Auf diese Weise kann das Membranfiltrationsmodul einfach hergestellt werden.

Die Mündung oder das Ende des Abzugsrohres 6 umgebend ist ein Teilbereich angeordnet, der einen vergrößerten Außendurchmesser umfasst. Dadurch wird eine Verbindungsplatte 10 gebildet, mit der die Verbindungseinrichtung 11 lösbar verbunden, insbesondere verschraubt ist. Im Verbindungsbereich 17 ist die Verbindung im Wesentlichen spaltfrei ausgebildet. Dadurch ist eine besonders hygienische Ausbildung möglich. Auch Abdichtungen in diesem Bereich 17 sind im Wesentlichen spaltfrei ausgebildet. Die Verbindungseinrichtung 11 umfasst außerdem ein Verbindungselement 16, mit dem ein nicht dargestelltes externes Rohr verbunden werden kann.

Bei dem Verbindungselement 16 kann es sich beispielsweise um Clampverbindungen wie beispielsweise das Verbindungselement "Bio-Connect" der Firma Neumo handeln. Alternativ können auch schraubbare Flanschverbindungen eingesetzt werden.

Die Verbindungseinrichtung 11 ist in diesem Beispiel außerdem derart ausgebildet, dass sie einen Deckel des Gehäuses 12 bildet. Mit anderen Worten umfasst die Verbindungseinrichtung 11 ein Element, das als Deckplatte oder Abdeckplatte des Gehäuses 12 dient.

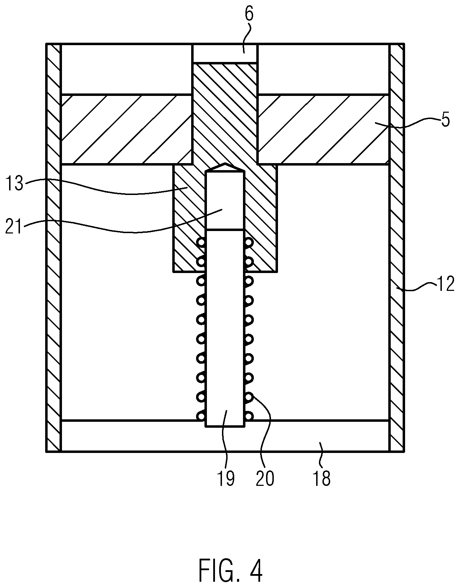

In Figur 4 ist ein weiterer Abschnitt eines beispielhaften Membranfiltrationsmoduls 1 dargestellt, in dem insbesondere ein Verschlusselement 13 angeordnet ist, das ein Ende des Abzugsrohres 6 verschließt. Das Abschlusselement 13 ist über ein Verbindungselement 19 formschlüssig mit dem Gehäuse 12, insbesondere einer Bodenplatte 18 des Gehäuses 12, verbunden.

In der Regel ist dieser Abschnitt bei stehenden Membranmodulen unten angeordnet.

Das Verbindungselement 19 des Gehäuses 12 kann dabei insbesondere formschlüssig in eine Aussparung 21 des Verschlusselements 13 eingreifen. Das Verschlusselement 13 umfasst in diesem Beispiel außerdem ein Federelement 20, über welches es federnd am Gehäuse 12, insbesondere an der Bodenplatte 18, gelagert ist. Dazu umgibt das Federelement 20 die Verbindungseinrichtung 19 und durch die Aussparung 21 ist ein vorherbestimmter Federweg gegeben. Durch das Federelement 20 kann das Verschlusselement 13 außerdem mit einer Federkraft beaufschlagt werden, die das Verschlusselement 13 gegen das Membranelement 2 drückt und damit das Abzugsrohr 6 verschließt. Dadurch kann ein besonders zuverlässiges Verschließen erreicht werden.

Das Federelement 20 ist in diesem Beispiel eine Schraubenfeder. Alternativ können jedoch auch beliebige andere elastische Elemente vorgesehen sein, die insbesondere unter Belastung nachgeben und nach Entlastung in die ursprüngliche Gestalt zurückkehren.

Durch die federnde Lagerung des Verschlusselements 13 kann bei einer Sanitisierung des Membranfiltrationsmoduls 1 mit Heißwasser und/oder Dampf die unterschiedliche Längenausdehnung des Membranelements 2 und des Abzugsrohres 6 auf der einen Seite und des Gehäuses 12 (beispielsweise einem Edelstahlgehäuse) auf der anderen Seite kompensiert werden. Die unterschiedliche Längenausdehnung erfolgt dabei insbesondere entlang der Längsachse des Membranfiltrationsmoduls.

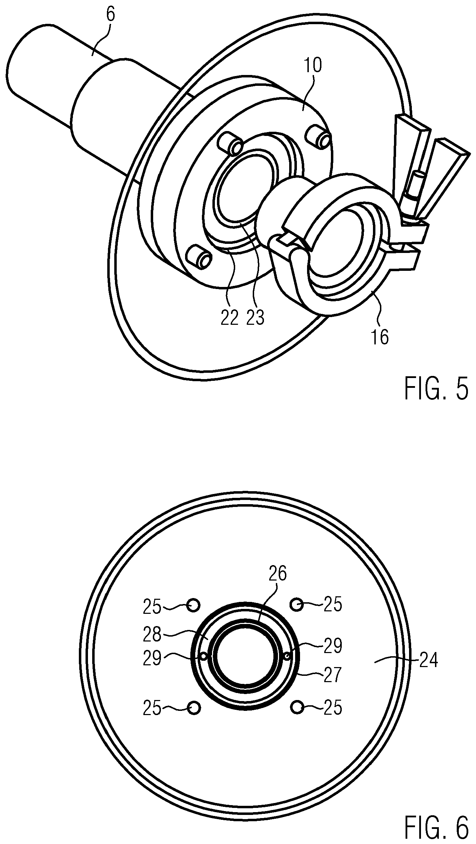

In Figur 5 sind weitere beispielhafte Bestandteile eines beispielhaften Membranfiltrationsmoduls illustriert. Insbesondere ist ein zweiter Längsabschnitt eines beispielhaften Abzugsrohres 6 dargestellt, an dessen Endbereich eine Verbindungsplatte 10 angeordnet ist. Außerdem dargestellt ist ein Verbindungselement 16, an das eine nicht dargestellte externe Rohrleitung angeschlossen werden kann. Weitere Teile der Verbindungseinrichtung des Membranfiltrationsmoduls sind nicht dargestellt beziehungsweise lediglich durch eine Ellipse angedeutet, um den Verbindungsbereich zwischen dem Abzugsrohr 6 und der Verbindungseinrichtung zu zeigen. In diesem Bereich umfasst das Abzugsrohr 6 insbesondere zwei Dichtringe 22 und 23, die konzentrisch um die Symmetrieachse des Abzugsrohres 6 angeordnet sind.

Figur 6 zeigt einen Teil einer beispielhaften Verbindungseinrichtung, die mit dem Abzugsrohr 6 der Figur 5 verbunden werden kann. Insbesondere ist eine Abdeckplatte 24 dargestellt, die auch als Deckel eines Gehäuses 12 eines beispielhaften Membranfiltrationsmoduls dient. In der Deckplatte 24 sind Bohrungen 25 vorgesehen, über die die Deckplatte 24 mit der Verbindungsplatte 10 eines Abzugsrohres 6 aus Figur 5 verschraubt werden kann.

Außerdem dargestellt sind zwei Nuten 26 und 27. In diese Nuten 26, 27 können Dichtringe 22, 23, wie beispielsweise in Figur 5 dargestellt, eingreifen und damit eine im Wesentlichen spaltfreie Abdichtung ermöglichen. Zwischen den Nuten 26, 27 ist ein Leckageraum 28 vorgesehen. Im Leckageraum 28 sind außerdem zwei Leckagebohrungen 29 angeordnet.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Membranfiltrationsmodul (1) umfassend:
ein Membranelement (2) zum Filtern einer Flüssigkeit;
ein Abzugsrohr (6) für das Permeat oder Filtrat; und
eine Verbindungseinrichtung (11) zum Verbinden einer Rohrleitung mit dem Abzugsrohr (6);
wobei die Mantelfläche des Abzugsrohres (6) entlang eines ersten Längsabschnitts (8) von dem Membranelement (2) umgeben wird,
wobei das Abzugsrohr (6) in einem zweiten Längsabschnitt (9) über das Membranelement (2) hinausragt, und
wobei die Verbindungseinrichtung (11) im Bereich des zweiten Längsabschnitts (9) mit dem Abzugsrohr (6) verbunden ist;
**dadurch gekennzeichnet, dass**
das Abzugsrohr (6) über eine Verbindungsplatte (10) mit der Verbindungseinrichtung (11) verbunden ist, wobei die Verbindungsplatte (10) und das Abzugsrohr (6) einstückig ausgebildet sind, oder die Verbindungsplatte (10) mit dem Abzugsrohr (6) verklebt oder verschweißt ist;
wobei die Verbindungseinrichtung (11) lösbar mit der Verbindungsplatte (10) verbunden ist, insbesondere verschraubt ist; und
wobei im Verbindungsbereich des Abzugsrohres (6) mit der Verbindungseinrichtung (11) ein Leckageraum (28), insbesondere mit wenigstens einer Leckagebohrung (29), vorgesehen ist.

2. Membranfiltrationsmodul (1) nach Anspruch 1, wobei die Verbindung zwischen der Verbindungseinrichtung (11) und dem Abzugsrohr (6) im Wesentlichen spaltfrei ausgebildet ist.

3. Membranfiltrationsmodul (1) nach Anspruch 1 oder 2, wobei das Abzugsrohr (6) einstückig ausgebildet ist oder aus wenigstens zwei Teilen besteht, die miteinander verklebt und/oder verschweißt sind.

4. Membranfiltrationsmodul (1) nach einem der vorangegangenen Ansprüche, außerdem umfassend ein Gehäuse (12), insbesondere wobei die Verbindungseinrichtung (11) mit dem Gehäuse (12) verbunden ist.

5. Membranfiltrationsmodul (1) nach Anspruch 4, wobei ein Ende des Abzugsrohres (6), insbesondere das Ende, das dem zweiten Längsabschnitt (9) gegenüber liegt, mit einem Verschlusselement (13) verschlossen ist, das insbesondere mit dem Gehäuse (12) verbunden ist.

6. Membranfiltrationsmodul (1) nach Anspruch 5, wobei das Verschlusselement (13) federnd am Gehäuse (12) gelagert ist.

7. Membranfiltrationsmodul (1) nach einem der vorangegangenen Ansprüche, wobei das Abzugsrohr (6) und/oder die Verbindungseinrichtung (11) eine doppelte Nut im Verbindungsbereich des Abzugsrohres (6) mit der Verbindungseinrichtung (11) umfasst.

## Claims

1. Membrane filtration module (1) comprising:
a membrane element (2) for filtering a liquid;
a discharge pipe (6) for the permeate or filtrate; and
a connection device (11) for connecting a conduit to the discharge pipe (6);
wherein the surface shell of the discharge pipe (6) along a first longitudinal part (8) is surrounded by the membrane element (2),
wherein the discharge pipe (6) in a second longitudinal part (9) protrudes over the membrane element (2), and
wherein the connection device (11) is connected to the discharge pipe (6) in the region of the second longitudinal part (9);
**characterized in that**
the discharge pipe (6) is joined to the connection device (11) by a connecting plate (10), wherein the connecting plate (10) and the discharge pipe (6) are formed as one part or the connecting plate (10) is bonded or welded to the discharge pipe (6);
wherein the connection device (11) is detachably joined to the connecting plate (10), in particular by bolting; and
wherein a leakage space (28), in particular with at least one leakage hole (29), is provided in the joining region of the discharge pipe (6) to the connection device (11).

2. Membrane filtration module (1) according to Claim 1, wherein the joint between the connection device (11) and the discharge pipe (6) is formed essentially without any gap.

3. Membrane filtration module (1) according to Claim 1 or 2, wherein the discharge pipe (6) is formed as one part or consists of at least two parts which are bonded and / or welded together.

4. Membrane filtration module (1) according to one of the previous claims, additionally comprising a housing (12), in particular wherein the connection device (11) is joined to the housing (12).

5. Membrane filtration module (1) according to Claim 4, wherein one end of the discharge pipe (6), in particular that end located opposite the second longitudinal part (9), is closed by a closing element (13), which is in particular joined to the housing (12).

6. Membrane filtration module (1) according to Claim 5, wherein the closing element (13) is supported spring-loaded on the housing (12).

7. Membrane filtration module (1) according to one of the previous claims, wherein the discharge pipe (6) and / or the connection device (11) comprises a double groove in the joining region of the discharge pipe (6) to the connection device (11).

## Revendications

1. Module de filtration à membrane (1) comprenant :
un élément de membrane (2) pour filtrer un liquide ; un tube d'extraction (6) pour le perméat ou le filtrat ; et
un dispositif de liaison (11) pour relier une conduite tubulaire au tube d'extraction (6) ; module de filtration
dans lequel la surface-enveloppe du tube d'extraction (6) est entourée, le long d'un premier tronçon longitudinal (8), par l'élément de membrane (2),
dans lequel le tube d'extraction (6) fait saillie, sur un deuxième tronçon longitudinal (9), de l'élément de membrane (2), et
dans lequel le dispositif de liaison (11) est relié, dans la zone du deuxième tronçon longitudinal (9), au tube d'extraction (6) ;
**caractérisé en ce que**
le tube d'extraction (6) est relié par l'intermédiaire d'une plaque de liaison (10) au dispositif de liaison (11), la plaque de liaison (10) et le tube d'extraction (6) étant réalisés d'un seul tenant, ou bien la plaque de liaison (10) et le tube d'extraction (6) étant collés ou soudés l'un à l'autre ;
le dispositif de liaison (11) étant relié de manière amovible à la plaque de liaison (10), notamment par vissage ; et
une chambre de fuite (28), notamment avec au moins un alésage de fuite (29), étant prévue dans la zone de liaison du tube d'extraction (6) avec le dispositif de liaison (11).

2. Module de filtration à membrane (1) selon la revendication 1, dans lequel la liaison entre le dispositif de liaison (11) et le tube d'extraction (6) est réalisée sensiblement sans interstice.

3. Module de filtration à membrane (1) selon la revendication 1 ou la revendication 2, dans lequel le tube d'extraction (6) est réalisé d'une seule pièce ou est constitué d'au moins deux pièces, qui sont mutuellement collées et/ou soudées ensemble.

4. Module de filtration à membrane (1) selon l'une des revendications précédentes, comprenant, en outre, un carter (12), le dispositif de liaison (11) étant notamment relié au carter (12).

5. Module de filtration à membrane (1) selon la revendication 4, dans lequel une extrémité du tube d'extraction (6), notamment l'extrémité qui est opposée au deuxième tronçon longitudinal (9), est fermée par un élément de fermeture (13), qui est notamment relié au carter (12).

6. Module de filtration à membrane (1) selon la revendication 5, dans lequel l'élément de fermeture (13) est monté de manière élastique sur le carter (12).

7. Module de filtration à membrane (1) selon l'une des revendications précédentes, dans lequel le tube d'extraction (6) et/ou le dispositif de liaison (11) comprend une rainure double dans la zone de liaison du tube d'extraction (6) avec le dispositif de liaison (11) .
